(19) **Europäisches Patentamt / European Patent Office / Office européen des brevets**

(11) **EP 3 623 963 B1**

(12) **EUROPEAN PATENT SPECIFICATION**

(45) Date of publication and mention
of the grant of the patent:
**01.11.2023 Bulletin 2023/44**

(21) Application number: **18866263.9**

(22) Date of filing: **26.09.2018**

(51) International Patent Classification (IPC):
*G06F 16/17* ^(2019.01)     *H04L 9/32* ^(2006.01)

(52) Cooperative Patent Classification (CPC):
**H04L 67/1095**

(86) International application number:
**PCT/CN2018/107512**

(87) International publication number:
**WO 2019/072085 (18.04.2019 Gazette 2019/16)**

(54) **LOG ENTRY DUPLICATION METHOD AND DEVICE, COMPUTER EQUIPMENT, AND STORAGE MEDIUM**

PROTOKOLLEINTRAGDUPLIZIERUNGSVERFAHREN UND -VORRICHTUNG, COMPUTERAUSRÜSTUNG UND SPEICHERMEDIUM

PROCÉDÉ ET DISPOSITIF DE DUPLICATION D'ENTRÉE DE JOURNAL, ÉQUIPEMENT INFORMATIQUE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2017 CN 201710949026**

(43) Date of publication of application:
**18.03.2020 Bulletin 2020/12**

(73) Proprietor: **Tencent Technology (Shenzhen) Company Limited**
**Shenzhen, Guangdong, 518057 (CN)**

(72) Inventors:
• **GUO, Rui**
  **Shenzhen**
  **Guangdong 518057 (CN)**
• **LI, Maocai**
  **Shenzhen**
  **Guangdong 518057 (CN)**
• **ZHANG, Jianjun**
  **Shenzhen**
  **Guangdong 518057 (CN)**
• **WANG, Zongyou**
  **Shenzhen**
  **Guangdong 518057 (CN)**
• **LIANG, Jun**
  **Shenzhen**
  **Guangdong 518057 (CN)**

• **TU, Haitao**
  **Shenzhen**
  **Guangdong 518057 (CN)**
• **ZHAO, Qi**
  **Shenzhen**
  **Guangdong 518057 (CN)**
• **LIU, Binhua**
  **Shenzhen**
  **Guangdong 518057 (CN)**
• **ZHU, Dawei**
  **Shenzhen**
  **Guangdong 518057 (CN)**
• **QIN, Qing**
  **Shenzhen**
  **Guangdong 518057 (CN)**

(74) Representative: **Gunzelmann, Rainer**
**Wuesthoff & Wuesthoff**
**Patentanwälte PartG mbB**
**Schweigerstraße 2**
**81541 München (DE)**

(56) References cited:
**CN-A- 106 484 709     CN-A- 106 777 270**
**CN-A- 107 124 305     CN-A- 107 967 291**
**US-B2- 9 367 410**

**(Cont. next page)**

- **Diego Ongaro ET AL: "In Search of an Understandable Consensus Algorithm", Proceedings of USENIX ATC '14: 2014 USENIX Annual Technical Conference, June 19-20, 2014 - Philadelphia, PA, 19 June 2014 (2014-06-19), pages 305-319, XP055630887, Retrieved from the Internet: URL:https://www.usenix.org/system/files/conference/atc14/atc14-paper-ongaro.pdf [retrieved on 2019-10-10]**

**Description**

**Field of the Invention**

The present invention relates to the technical field of block chain, in particular to a log entry duplication method and apparatus, a computer device and a storage medium.

**Background of the Invention**

With the continuous development of information technologies, in order to improve the security of data and ensure the openness and transparency of the data, it is common to provide a data recording service for a client based on a node cluster. When a data recording service is provided for the client based on the node cluster, logs stored by each node in the node cluster correspond to a same block chain. When the client needs to add the data to be recorded to the logs of each node in the node cluster, the data to be recorded is essentially copied into a next block of a current block in the block chain on the node. Since the data already stored in the block chain of the node may not be changed, the data to be recorded may be effectively prevented from being tampered, and the safety of the data is improved.

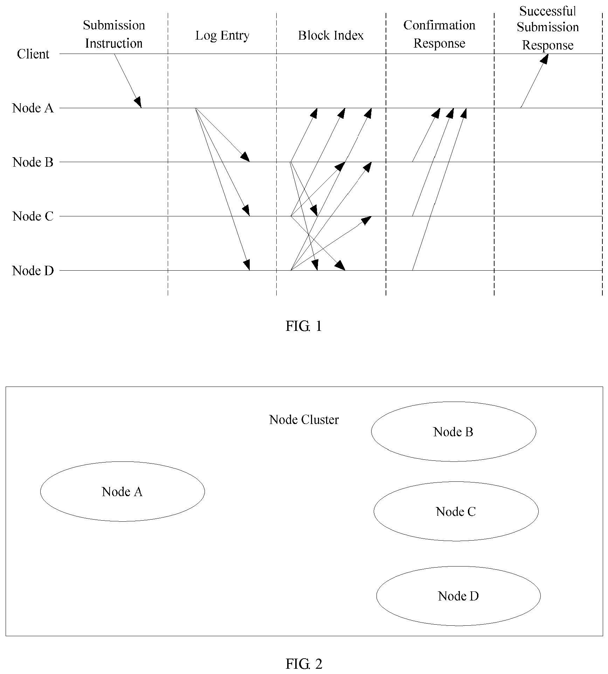

When performing data recording, working states of nodes in the node cluster may be divided into Follower (a following state), Candidate (a candidate state) and Leader (a leading state), that is, the nodes in the node cluster may be divided into a follower node, a candidate node and a leader node. Referring to FIG. 1, in the case where it has been determined that a node A is a leader node and a node B, a node C and a node D are follower nodes, when the client issues a submission instruction to the node A, the node A adds the submission instruction to its own log to form a log entry, and broadcasts the log entry to the node B, the node C and the node D. After receiving the log entry broadcast by the node A, the node B, the node C and the node D broadcast a block index of the log entry to other nodes in the node cluster. For any node among the node B, the node C and the node D, when it is determined, based on a consensus algorithm, that the nodes in the node cluster have reached consensus, the log entry is copied into the log of the node, and when the copying is completed, a commit index of the node itself is updated and a confirmation response is sent to the node A. And after it is determined by the node A based on the consensus algorithm that the nodes in the node cluster have reached consensus, the node A sends a successful submission response to the client.

The node cluster performs the data recording process serially, that is, when a plurality of clients simultaneously issue log entries to the node cluster, a node in the node cluster needs to wait for completion of a data recording process of a current client before it may process a log entry of a next client, resulting in low efficiency of log entry duplication.

Document Diego Ongaro ET AL, "In Search of an Understandable Consensus Algorithm", Proceedings of USENIX ATC '14: 2014 USENIX Annual Technical Conference, June 19-20, 2014 - Philadelphia, PA, (20140619), pages 305 - 319, concerns an analysis of the Raft consensus algorithm for managing a replicated log, in which a leader node issues remote procedure calls in parallel to follower nodes.

**Summary of the Invention**

The present invention concerns a log entry duplication method according to claim 1, wherein the method is applied to a first node running in a leading state in a node cluster comprising a plurality of second nodes running in a following state, and a log entry duplication method according to claim 6, wherein the method is applied to a second node running in a following state in a node cluster comprising a first node running in a leading state. Further aspects of the present invention are defined in the dependent claims.

The embodiments of the present invention provide a log entry duplication method and apparatus, a computer device and a storage medium, which may solve the problem of low efficiency. The technical scheme is described as follows.

In one aspect, the invention provides a log entry duplication method, which is applied to a first node running in a leading state in a node cluster including a plurality of second nodes running in a following state. The method includes:

sending in parallel a plurality of first log entries to the plurality of the second nodes, each first log entry being used for instructing a second node to duplicate the first log entry;
receiving at least one confirmation response of any one of the plurality of the second nodes, each confirmation response including a commit index of the second node;
acquiring at least one second log entry to be sent supplementarily to the second node according to the commit index of the second node; and
sending in parallel the at least one second log entry to the second node, each second log entry being used for instructing the second node to duplicate the second log entry.

In one aspect, the invention provides a log entry duplication method, which is applied to a second node running in a following state in a node cluster including a first node running in a leading state. The method includes:

> receiving in parallel a plurality of log entries sent by the first node, each log entry being used for instructing the second node to record the log entry;
> duplicating the log entry into a log of the second node according to a block index of each log entry, and updating a commit index of the second node; and
> sending a confirmation response to the first node, the confirmation response including the commit index of the second node.

In one aspect, the invention provides a log entry duplication apparatus, which is applied to a first node running in a leading state in a node cluster further including a plurality of second nodes running in a following state. The apparatus includes:

> a sending module, used for sending in parallel a plurality of first log entries to a plurality of second nodes, each first log entry being used for instructing a second node to duplicate the first log entry;
> a receiving module, used for receiving at least one confirmation response of any one of the plurality of the second nodes, each confirmation response including a commit index of the second node;
> an acquiring module, used for acquiring at least one second log entry to be sent supplementarily to the second node according to the commit index of the second node; and
> the sending module is further used for sending in parallel the at least one second log entry to the second node, each second log entry being used for instructing the second node to duplicate the second log entry.

In one aspect, the invention provides a log entry duplication apparatus, which is applied to a second node running in a following state in a node cluster further including a first node running in a leading state. The apparatus includes:

> a receiving module, used for receiving in parallel a plurality of log entries sent by the first node, each log entry being used for instructing the second node to record the log entry;
> a duplicating module, used for duplicating the log entry into a log of the second node according to a block index of each log entry, and updating a commit index of the second node; and
> a sending module, used for sending a confirmation response to the first node, the confirmation response including the commit index of the second node.

In one aspect, the invention provides a computer device, including a memory, a processor, and computer-executable instructions stored on the memory and executable by the processor which, when executing the computer-executable instructions, implements the following log entry duplication method including: sending in parallel a plurality of first log entries to the plurality of the second nodes, each first log entry being used for instructing a second node to duplicate the first log entry; receiving at least one confirmation response of any one of the plurality of the second nodes, each confirmation response including a commit index of the second node; acquiring at least one second log entry to be sent supplementarily to the second node according to the commit index of the second node; and sending in parallel the at least one second log entry to the second node, each second log entry being used for instructing the second node to duplicate the second log entry.

In one aspect, the invention provides a computer-readable storage medium having stored thereon instructions that are executed by a processor to perform the following log entry duplication method including: sending in parallel a plurality of first log entries to the plurality of the second nodes, each first log entry being used for instructing a second node to duplicate the first log entry; receiving at least one confirmation response of any one of the plurality of the second nodes, each confirmation response including a commit index of the second node; acquiring at least one second log entry to be sent supplementarily to the second node according to the commit index of the second node; and sending in parallel the at least one second log entry to the second node, each second log entry being used for instructing the second node to duplicate the second log entry.

In one aspect, the invention provides a computer device, including a memory, a processor, and computer-executable instructions stored on the memory and executable by the processor which, when executing the computer-executable instructions, implements the following log entry duplication method including: receiving in parallel a plurality of log entries sent by the first node, each log entry being used for instructing the second node to record the log entry; duplicating the log entry into a log of the second node according to a block index of each log entry, and updating a commit index of the second node; and sending a confirmation response to the first node, the confirmation response including the commit index of the second node.

In one aspect, the invention provides a computer-readable storage medium having stored thereon instructions that are executed by a processor to perform the following log entry duplication method including: receiving in parallel a plurality of log entries sent by the first node, each log entry being used for instructing the second node to record the log entry; duplicating the log entry into a log of the second node according to a block index of each log entry, and updating a commit index of the second node; and sending a confirmation response to the first node, the confirmation response including the commit index of the second node.

The first node sends in parallel a plurality of first log entries to a plurality of second nodes, and receives at least one confirmation response of any of the second nodes including a commit index of the second node so as to send in parallel at least one second log entry to the second node according to the commit index of the second node. In addition, as the plurality of first log entries are sent in parallel to the plurality of second nodes and in order to avoid the situation that the second nodes receive log entries by mistake such as missing receiving or over-receiving due to network problems, the first node further provides a supplementary sending mechanism for log entries, so that the time for sending a plurality of first log entries is saved while the consistency of data of each node in the node cluster is guaranteed, and the log entry duplicating efficiency is improved.

## Brief Description of the Drawings

In order to more clearly illustrate the technical solutions of the embodiments of the present invention, the drawings used in the description of the embodiments are briefly described below, and it is obvious that the drawings in the description below are only some embodiments of the present invention, and that other drawings may be obtained based on these drawings by ordinary persons skilled in the art without creative efforts.

FIG. 1 is a schematic diagram of an existing log entry duplication method;
FIG. 2 is a schematic diagram of an implementation environment of a log entry duplication method provided by an embodiment of the present invention;
FIG. 3 is a flow chart of a log entry duplication method provided by an embodiment of the present invention;
FIG. 4 is a schematic diagram of a log entry duplication method provided by an embodiment of the present invention;
FIG. 5 is a schematic diagram of a log entry duplication method provided by an embodiment of the present invention;
FIG. 6 is a schematic diagram of a log entry duplication method provided by an embodiment of the present invention;
FIG. 7 is a schematic diagram of a log entry duplication method provided by an embodiment of the present invention;
FIG. 8 is a schematic structural diagram of a log entry duplication apparatus provided by an embodiment of the present invention;
FIG. 9 is a schematic structural diagram of a log entry duplication apparatus provided by an embodiment of the present invention;
FIG. 10 is a schematic structural diagram of a log entry duplication apparatus provided by an embodiment of the present invention;
FIG. 11 is a schematic structural diagram of a log entry duplication apparatus provided by an embodiment of the present invention;
FIG. 12 is a schematic structural diagram of a log entry duplication apparatus provided by an embodiment of the present invention;
FIG. 13 is a schematic structural diagram of a log entry duplication apparatus provided by an embodiment of the present invention;
FIG. 14 is a schematic structural diagram of a log entry duplication apparatus provided by an embodiment of the present invention;
FIG. 15 is a schematic structural diagram of a computer device 1500 provided by an embodiment of the present invention.

## Detailed Description of the Invention

In order to make objectives, technical solutions and advantages of the present invention more apparent, implementations of the present invention will be further described in detail with reference to the accompanying drawings.
Before explaining an embodiment of the present invention in detail, a brief description will be given to an implementation environment in which nodes involved in the embodiment of the present invention operate.
Referring to the implementation environment for node operation shown in FIG. 2, the implementation environment is a system composed of a plurality of nodes, and the system is also equivalent to a node cluster, each node refers to a basic unit being capable of performing operations like consensus operation, data storing, data forwarding, data verifying and etc. The nodes may be composed of one or more computer devices. The nodes are divided into a leader node, a follower node and a candidate node according to a working state of each node in the node cluster. As shown in FIG. 2, a node A is a leader node in the node cluster, and a node B, a node C and a node D are follower nodes in the node cluster. When the node A works normally, the node A broadcasts a heartbeat message to the node B, the node C and the node D at regular time. When receiving the heartbeat message, the node B, the node C and the node D may determine that the node A works normally, then reset a heartbeat timer and wait to receive a next heartbeat message. Due to the possible existence of a fraud node in the node cluster, where the fraud node invades into the node cluster and attempts to tamper with data in a follower node, in order to prevent the fraud node from masquerading as a leader node to send a pseudo heartbeat message to the follower nodes in the node cluster, the leader node usually includes, in the heartbeat message when sending the heartbeat message to the follower nodes, a vote signature of each follower node during the election of the leader node, to prove that the leader node is a real leader node.

When the node cluster provides a data recording service for a client, the client issues a plurality of submission instructions to the leader node in the node cluster. The leader node adds the plurality of the submission instructions to a log of the leader node to form a plurality of log entries, and sends in parallel the plurality of the log entries to each follower node in the node cluster. It should be noted that in order to avoid the fraud node tampering with the plurality of the log entries sent by the leader node, the leader node may encrypt the log entries based on an algorithm signature when sending the log entries to the follower nodes, for example, encrypting the log entries based on a RSA (Ron Rivest AdiShamir Leonard Adleman, asymmetric encryption) algorithm. When the follower nodes receive the plurality of the log entries in parallel, the follower nodes duplicate the log entries according to a block index of each log entry, and when the duplication of the log entries is completed, the follower nodes return a confirmation response including a commit index to the leader node, so that the leader node learns that the follower nodes have currently finished the duplication of the log entries. In a possible implementation, the node cluster may be an underlying data sharing system based on a block chain technology, each node has a block chain stored thereon, the block chain is formed by a plurality of blocks linked together, the log entry may be recording data submitted by the client, the log stored by each node in the node cluster may correspond to a block chain, and a process of forming a log entry by adding the recording data to the log is actually a process of storing the recording data in the form of a block as a next block of a current block. It should be noted that the recording data may be transaction data or the like.

To facilitate understanding of subsequent embodiments, some terms are firstly explained herein:

a block index or block height, used for indicating a log entry, that is, for indicating a block;
a commit index, used for indicating a current duplicating condition of a log entry by a node within a current running term; and
a last append index, used for indicating a log entry that a node has submitted.

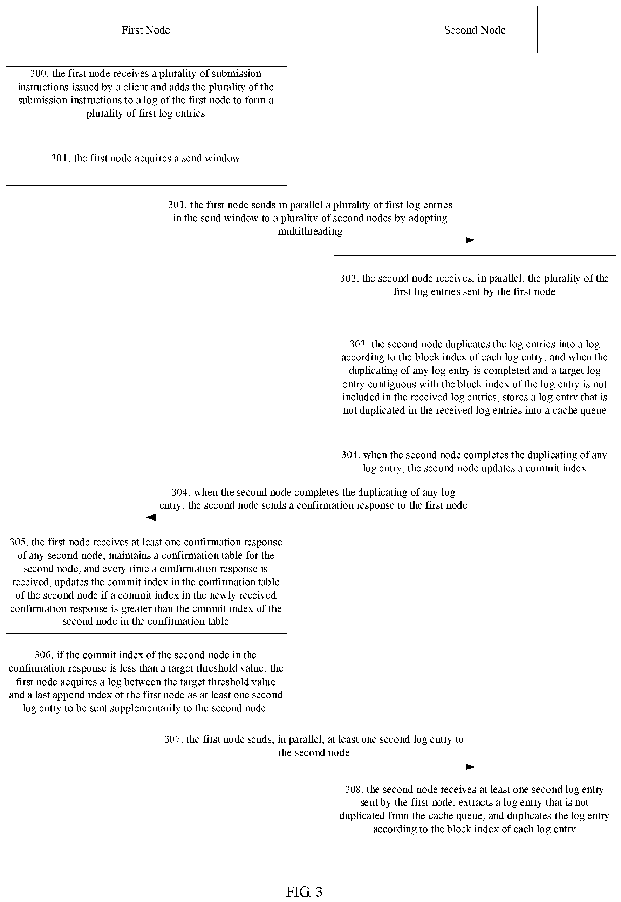

FIG. 3 is a flowchart of a log entry duplication method provided by an embodiment of the present invention. In order to facilitate description, in the embodiment of the present invention, a first node refers to a node running in a leading state in a node cluster, that is, a leader node; a second node refers to a node running in a following state in the node cluster, that is, a follower node. As shown in FIG. 3, the method includes following steps.

300: the first node receives a plurality of submission instructions issued by a client and adds the plurality of the submission instructions to a log of the first node to form a plurality of first log entries.

The submission instructions are used to submit recording data to the node cluster, so that the node cluster may record the recording data on each node. Any client served by the node cluster may send a plurality of submission instructions, thus at step 300 it may be one client served by the node cluster that sends a plurality of submission instructions to the first node, or a plurality of clients that send a plurality of submission instructions to the first node, which is not limited in the embodiment of the present invention.

301: the first node acquires a send window and sends in parallel a plurality of first log entries in the send window to a plurality of second nodes by adopting multithreading, each first log entry being used for instructing a second node to duplicate a first log entry according to a block index.

In an embodiment of the present invention, in order to implement parallel transmission of a plurality of log entries to the plurality of the second nodes, the send window may be set, and a plurality of first log entries may be sent based on the send window. The size of the send window is determined by network bandwidth and may be adjusted. The window width of the send window is used for indicating the number of log entries sent in parallel. The window width of the send window may usually be obtained based on the following formula 1.

Formula 1: network bandwidth = data size of a plurality of log entries * window width * the number of nodes

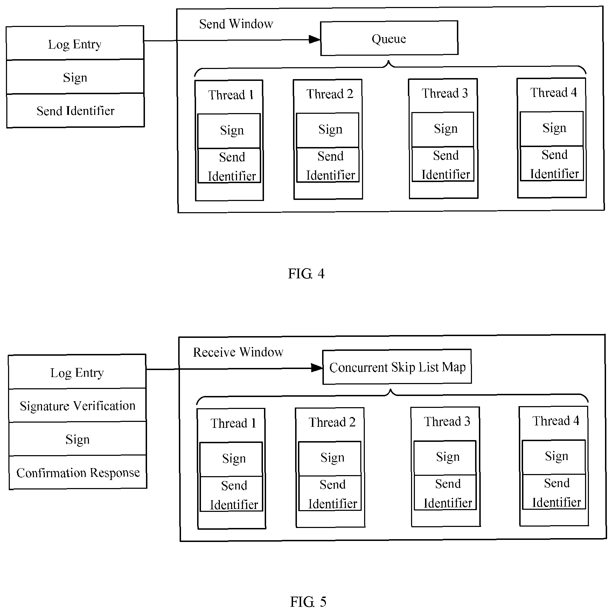

The first node sends a plurality of first log entries based on the send window based on the multithreading, and adds a first log entry to each thread in a sending queue. The first log entries are sent out of order through the multithreading to realize the parallel transmission. For example, referring to the send window shown in FIG. 4, the sending queue of the send window is a Queue which includes four threads: Thread1, Thread2, Thread3 and Thread4, each of which includes a first log entry including a Sign and a Send identifier. This way of parallel transmission may be referred to as a parallel pipeline, which avoids the transmission time required for serially sending log entries due to the adoption of an out-of-order way of transmission. For example, if it takes 10 ms to send one log entry, when adopting serial transmission, then only 100 log entries may be sent per second, but when adopting the parallel transmission, the goal of maximum bandwidth utilization may be achieved, and if the send window includes 50 log entries, then the parallel transmission of 50 log entries requires about 10ms and the transmission time of 100 log entries may be reduced to about 20ms, thus the whole transmission time may be reduced by dozens of times, and the data throughput is greatly increased by means of the parallel transmission way.

It should be noted that since the first node sends a plurality of first log entries in parallel, the plurality of the first log entries received by the second nodes may be out of order. In order to ensure that the second nodes duplicate the plurality of data entries in order, the first log entries also includes a block index for indicating a duplicating order of the log entries, so that the second nodes still duplicate the log entries in order when receiving the out-of-order log entries.

In a possible implementation, the first node, when sending in parallel the plurality of the first log entries to the plurality of the second nodes, may send in parallel the plurality of the first log entries to the plurality of the second nodes without using the send window and multithreading. The embodiment of the present invention does not particularly limit the way in which the first node sends a plurality of first log entries in parallel.

In addition, in an embodiment of the invention, the send window is acquired by the first node in real time after receiving a plurality of submission instructions issued by the client. When acquiring the send window, a current available bandwidth of a network may be detected first, and then the send window is acquired according to the available bandwidth. In a possible implementation, the send window may also be pre-configured based on the maximum bandwidth of the network for direct use during subsequent parallel transmission. The embodiment of the invention does not specifically limit the timing for the first node to acquire the send window.

302: the second nodes receive, in parallel, the plurality of the first log entries sent by the first node.

In an embodiment of the present invention, the second nodes may set a receive window and receive the plurality of the first log entries based on the receive window. The size of the receive window may be determined by network bandwidth and may be adjusted. The window width of the receive window is used for indicating the number of log entries received in parallel. In this case, a method for acquiring the window width of the receive window is consistent with the method for acquiring the window width of the send window in the above step 301, and will not be described in detail herein.

The second node, when receiving the plurality of the first log entries based on the receive window, forms a receiving queue for the receive window based on multithreading. In this case, the receiving queue may be in the form of a Concurrent Skip List Map. The embodiment of the present invention does not specifically limit the form of the receiving queue. For each first log entry of the plurality of the received first log entries, the second node obtains a sign in the first log entry and verify the sign based on a first node public key stored on the second node to prevent receipt of fraud data sent by a fraud node. For example, referring to the receive window shown in FIG. 5, the receiving queue of the receive window is a Concurrent Skip List Map which includes four threads: Thread5, Thread6, Thread7 and Thread8, each of which includes a first log entry including a Sign and a Send identifier.

The embodiment of the present invention takes one second node in the node cluster as an example for description. However, in a possible implementation, there is a plurality of second nodes in the node cluster, and each of the plurality of the second nodes performs the operations shown in the embodiment of the present invention. It should be noted that due to the delay in the network and the possibility of data loss, the plurality of the first log entries sent in parallel by the first node may not arrive at the second node at the same time, i.e. the second node may not receive all of the first log entries sent by the first node at the same time. Further, if the data loss occurs, the second node may not receive all of the first log entries sent by the first node. Therefore, there may be a difference between the number of the first log entries received by the second node at step 302 and the number of the first log entries sent by the first node at step 301.

303: the second node duplicates the log entries into a log according to the block index of each log entry, and when the duplicating of any log entry is completed and a target log entry contiguous with the block index of the log entry is not included in the received log entries, stores a log entry that is not duplicated in the received log entries into a cache queue.

The inventors realize that since the first node adopts a way of parallel transmission when sending the plurality of the first log entries to the second node, the plurality of the first log entries received by the second node are likely to be out of order. When the second node duplicates a log entry in the plurality of the first log entries, the second node usually needs to perform serial duplication in sequence. Therefore, each log entry corresponds to a block index (i.e., block height), enabling the second node to correctly duplicate the first log entries according to the block index when receiving the first log entries arriving out of order, so that the block chain of the second node and the block chain of the first node may keep consistent in data.

In addition, due to the mechanism by which the second node duplicates the log entries in sequence, if a next log entry to be duplicated by the second node is not received, that is, the target log entry is not received, then the target log entry is the next log entry to be duplicated. The second node may not continue the duplicating operation of the log entry and needs to wait for receiving the target log entry before the second node may continue working. However, at this moment, the second node still receives other first log entries which arrive in parallel. In order to avoid interference between the process of receiving the first log entries and the process of waiting for receiving the target log entry, a cache queue is added to the second node. The cache queue is used to store a log entry which is received by the second node but is not duplicated temporarily as a block index is not contiguous with a block index of a currently-duplicated log entry. Therefore, when the second node subsequently receives the target log entry whose block index is contiguous with the block index of the currently-duplicated log entry, the second node may extract the log entry that is not duplicated from the cache queue and continue to duplicate it, so that the sequential duplication of log entries is guaranteed, and meanwhile the receiving of the first log entries is not affected, thus improving the duplicating efficiency of log entries.

304: when the second node completes the duplicating of any log entry, the second node updates a commit index and sends a confirmation response to the first node, in which the confirmation response includes the commit index of the second node.

In an embodiment of the present invention, the commit index of the second node is in fact a latest commit index of the second node for indicating the most recently stored log of the second node. The latest commit index may represent log integrity on a node. For any second node, after receiving a log entry, the second node broadcasts a block index of the received log entry to other second nodes so as to reach consensus with the other second nodes in the node cluster. When it is determined, based on the consensus algorithm, that the nodes in the node cluster reach consensus, the second node duplicates the log entry into its own log and updates its own commit index. For example, after the second node duplicates the log entry into its own log, the second node may increment a current commit index of the second node by 1 to obtain a latest commit index, and subsequently send the confirmation response including the latest commit index to the first node. In this case, the commit index may be represented as Commit_index.

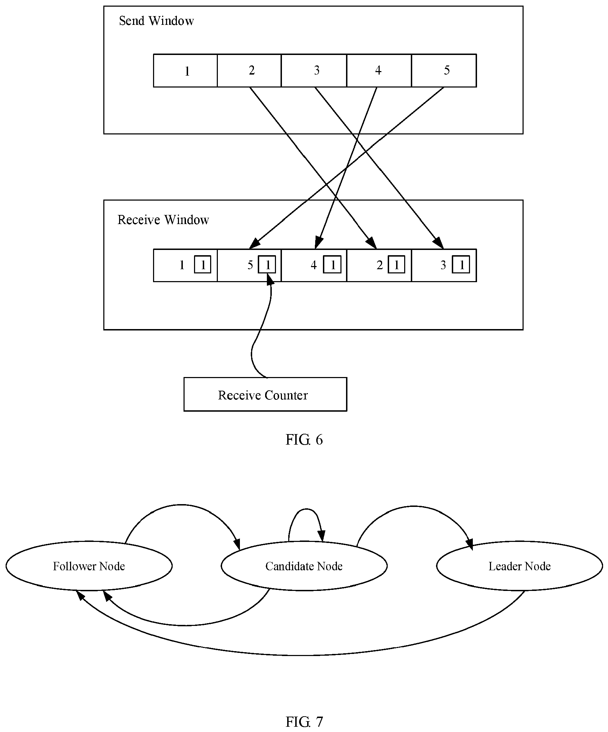

It should be noted that there may be delay in receiving the first log entry by the second node due to fluctuations in the network. As a result, the second node may not return the confirmation response to the first node in time. At this time, the first node may determine that packet loss occurs in the first log entry, resulting in that the second node does not return the confirmation response to the first node in time. Thus, the first node issues the first log entry to the second node again. It is possible for the second node to receive the same log entry for a plurality of times. In order to inform the first node in time that the same log entry is received for a plurality of times currently and avoid the occupation of bandwidth caused by supplementary sending by the first node for a plurality of times, the second node counts the block index of the log entry when receiving the log entry, and sends the confirmation response including the commit index of the second node to the first node again when any log entry is received for two or more times, so that the first node learns that packet loss phenomenon does not occur at the current second node and there is no need to perform the supplementary sending again. In a possible implementation, the second node may count the block index of the log entry based on a receive counter. Referring to FIG. 6, a Receive Counter used for counting the block indexes of log entries exists in the second node; first log entries sent by the first node are entry 1, entry 2, entry 3, entry 4 and entry 5 respectively; when the second node receives the above five first log entries, the Receive Counter in the second node is increased by 1 corresponding to the number of times for receiving the five first log entries. For example, when the second node receives one entry 1, the Receive Counter corresponding to the entry 1 is increased by 1; when the second node receives one entry 1 again, the Receive Counter corresponding to the entry 1 is increased by 1 again. Similarly, when the second node receives one entry 2, the Receive Counter corresponding to the entry 2 is increased by 1.

305: the first node receives at least one confirmation response of any second node, maintains a confirmation table for the second node, and every time a confirmation response is received, updates the commit index in the confirmation table of the second node if a commit index in the newly received confirmation response is greater than the commit index of the second node in the confirmation table.

In an embodiment of the present invention, in order to determine whether a log entry is to be sent supplementarily to the second node, the first node may maintain the confirmation table, extract the commit index of the second node from the confirmation response returned by the second node, and update the confirmation table in real time based on the commit index. In this case, the first node may maintain a confirmation table corresponding to each second node for each second node, extract a commit index from a confirmation response returned by the second node, and add the commit index into the confirmation table of the second node; or the second node may maintain one confirmation table, store commit indexes in confirmation responses returned by all of the second nodes into the confirmation table, and update the confirmation table in real time. In this case, the confirmation table may be represented as Commit_table.

Since the second node duplicates the log entries according to the block index, the commit index included in the confirmation response returned by the second node to the first node is incremental. That is, for the same second node, the commit index included in the confirmation response returned by the second node and received by the first node becomes larger and larger over time. Every time when the first node receives a confirmation response, the first node compares a commit index included in the confirmation response with a current commit index of the second node in the confirmation table. If the newly received commit index is greater than the current commit index of the second node in the confirmation table, the commit index corresponding to the second node in the confirmation table is updated to the newly received commit index. For example, for a node A, if a current commit index corresponding to the node A in the confirmation table is index3, and if the first node receives a confirmation response including index6 returned by the node A at this moment, the first node updates the commit index corresponding to the node A in the confirmation table to index6.

It should be noted that in a possible implementation, the first node may not maintain the confirmation table, but only correspondingly record a node identifier of the second node and the currently received commit index returned by the second node. When receiving a new confirmation response of the second node, the first node deletes the commit index corresponding to the node identifier of the second node from the record, and correspondingly records the node identifier of the second node and a commit index included in the new confirmation response. That is, the first node may update the commit index in the node identifier of the second node and the commit index which are recorded correspondingly, according to the received commit index returned by the second node. The embodiment of the present invention does not specifically limit the way in which the commit index returned by the second node is recorded.

306: if the commit index of the second node in the confirmation response is less than a target threshold value, the first node acquires a log between the target threshold value and a last append index of the first node as at least one second log entry to be sent supplementarily to the second node.

In this case, the target threshold value is used to indicate a commit index that the second node should minimally reach under a normal condition. In an embodiment of the present invention, in order to predict the packet loss condition of the second node in time and to send supplementarily the log entries possibly lost by the second node for the second node in time, and considering that there may be delay in receiving the first log entry by the second node, the target threshold value may be set in the first node, and a commit index in a confirmation response currently returned by each second node is detected on the basis of the target threshold value every other target cycle, so as to determine whether a log entry is to be sent supplementarily to the second node currently and which log entry is to be sent supplementarily.

When the first node detects the commit index in the confirmation response currently returned by each second node on the basis of the target threshold value every other target cycle, the first node generally compares the commit index in the confirmation response currently returned by the second node with the target threshold value. If the commit index in the confirmation response currently returned by the second node is less than the target threshold value, the first node obtains a last append index from block indexes of all of log entries to be sent to the second node at present, and acquires a log entry corresponding to a block index between the target threshold value and the last append index as at least one second log entry to be sent supplementarily to the second node. For example, it is assumed that the last append index of the first node is index100 and the target threshold value is 50. If a commit index in a confirmation response returned by the second node that is currently acquired by the first node is index39 and because 39 is less than 50, the first node determines a log entry corresponding to a block index between index50 and index 1 00 as a second log entry.

In a possible implementation, the first node may not set the target threshold value, so that the first node may compare the commit index corresponding to the second node in the confirmation table with the last append index of the first node every other target cycle. If the commit index of the second node is less than the last append index of the first node, the first node acquires a log entry corresponding to a block index between the commit index of the second node and the last append index of the first node as a second log entry of the second node. For example, if the last append index of the first node is index100 and the commit index corresponding to the second node in the confirmation table is index89, then the first node may determine a log entry corresponding to a block index between index89 and index100 as a second log entry. Such method for acquiring the second log entry may increase the accuracy rate of supplementary sending. Further, by performing detection through the above process every target cycle, each second node is given a certain duplicating time, so that the situation of inaccurate data caused by over-detection is avoided, and the over-occupation of computing resources caused by real-time detection may also be avoided.

307: the first node sends, in parallel, at least one second log entry to the second node, each second log entry being used for instructing the second node to duplicate the second log entry.

In an embodiment of the present invention, after a second log entry to be sent supplementarily to the second node is determined, the first node may send the second log entry to the second node in parallel. In this case, the process in which the first node sends at least one second log entry in parallel to the second node is consistent with the process in which the first node sends a plurality of first log entries in parallel to the first node shown in the above step 301, and will not be described in detail herein.

308: the second node receives at least one second log entry sent by the first node, extracts a log entry that is not duplicated from the cache queue, and duplicates the log entry according to the block index of each log entry.

In an embodiment of the present invention, since the second node may duplicate the log entries according to the block index of each log entry, the block index of the second log entry sent supplementarily by the first node is contiguous with the currently-duplicated log entry and the block index of the second log entry is also contiguous with the block index of the log entry which is not duplicated in the cache queue. As such, the second node may continue the duplicating of the log entry. For example, if a block index of a log entry currently duplicated by the second node is 3 and the cache queue stores log entries with block indexes of 5, 6 and 7 which are not duplicated, when the second node receives a second log entry sent by the first node, where a block index of a log entry extracted from the second log entry is 4, the second node may extract the log entries with the block indexes of 5, 6 and 7 which are not duplicated from the cache queue and continue to duplicate the corresponding log entries in the order of the block indexes of 4, 5, 6 and 7.

It should be noted that the process in which the second node receives the at least one second log entry sent by the first node is consistent with the process in which a plurality of first log entries are received as described above in step 302, and will not be described further herein.

In a possible implementation, since a leader node in the node cluster may crash or the node cluster may be split, the current leader node is automatically degraded to a follower node, and a working state of each node in the node cluster may be dynamically switched. Referring to FIG. 7, an embodiment of the present invention provides a schematic diagram of switching a working state of a node. In the node cluster, the leader node sends a heartbeat message to the follower node at regular time. For the follower node in the node cluster, when the heartbeat timer of the follower node does not receive the heartbeat message sent by the leader node in a time-out situation, the follower node may determine that the leader node crashes, and the follower node may switch the working state into a candidate state to become a candidate node. Further, the candidate node resets the heartbeat timer and broadcasts a voting request to follower nodes in the node cluster. When more than half voting confirmation messages in the node cluster are received, the candidate node switches the working state to a leading state to become a leader node. It should be noted that as the leader node is responsible for sending a log entry to the follower node, the follower node which becomes the candidate node may be a node in the node cluster that has the largest number of duplicated log entries.

In an embodiment of the present invention, when switching of the working state occurs in the node cluster, on the one hand, the first node may switch its working state to the following state to become a follower node; on the other hand, the second node may switch its working state to the leading state to become a leader node. Both cases are described below.

In case one, the first node switches the working state to the following state.

When the first node switches to the following state, that is, the first node becomes the follower node, the first node clears a log entry which is not sent and stops the parallel transmission operation. In a specific possible embodiment, since the first node sends a plurality of first log entries in parallel using multithreading based on the send window, the first node clears a log entry which is not sent within the send window and closes the multiple threads. The first node has become the follower node, and subsequently the first node may receive a plurality of log entries sent by a new leader node. After becoming the follower node, the first node may initialize the receive window and start a plurality of threads of the receive window so as to subsequently receive in parallel a plurality of log entries sent by the new leader node.

It should be noted that since there is a log entry in the first node that is duplicated, the first node determines the last append index of the duplicated log entry of the first node, and sets a block index of a next log entry to be received as the last append index of the first node plus 1. For example, if the last append index of the currently-duplicated log entry of the first node is index56, the first node sets the block index of the next log entry to be received as index57, so as to receive a corresponding log entry including the index57 sent by the new leader node.

In this scenario, once a node running in the leading state crashes, the above-described clearing the log entry that is not sent and closing the multithreading for parallel transmission may prevent the node from affecting a normal operation of another node in the node cluster.

In case two, the second node switches the working state to the leading state.

When the second node switches to the leading state, that is, the second node becomes the leader node, the second node clears a log entry which is not duplicated, and stops the parallel receiving operation. In a specific possible embodiment, since the second node receives a plurality of first log entries in parallel using multithreading based on the receive window and the second node adds a log entry that is received but is not duplicated currently to the cache queue, the second node clears a log entry that is not duplicated in the cache queue and closes the multiple threads of the receive window. The second node has become a leader node, and the second node may subsequently send a plurality of log entries to the follower node in the node cluster. After becoming the leader node, the second node may initialize the send window and start a plurality of threads of the send window so as to subsequently send in parallel a plurality of log entries to the follower node.

It should be noted that since the second node, after becoming the leader node, does not know the progress of duplicating log entries by each follower node, and further does not know a commit index of a log entry to be sent to each follower node, the second node sets a confirmation table for a node in the following state in the node cluster according to the last append index of the currently-duplicated log entry of the second node, and sets the commit index of each node in the following state as the last append index of the second node plus 1, so as to trigger the follower node to return the commit index of the currently-duplicated log entry to the second node, so that the second node learns the duplicating progress of each follower node in the node cluster and sends a log entry to the follower node according to the duplicating progress of each follower node. For example, if the last append index of the currently-duplicated log entry of the second node is index99, the second node sets the commit index of each node in the following state as index100, and sends a corresponding log entry including the index100 to the plurality of follower nodes.

In the embodiments of the present invention, the first node sends in parallel a plurality of first log entries to a plurality of second nodes, and receives at least one confirmation response of any of the second nodes including a commit index of the second node so as to send in parallel at least one second log entry to the second node according to the commit index of the second node. In addition, as the plurality of first log entries are sent in parallel to the plurality of second nodes and in order to avoid the situation that the second nodes receive log entries by mistake such as missing receiving or over-receiving due to network problems, the first node further provides a supplementary sending mechanism for log entries, so that the time for sending a plurality of first log entries is saved while the consistency of data of each node in the node cluster is guaranteed, and the log entry duplicating efficiency is improved.

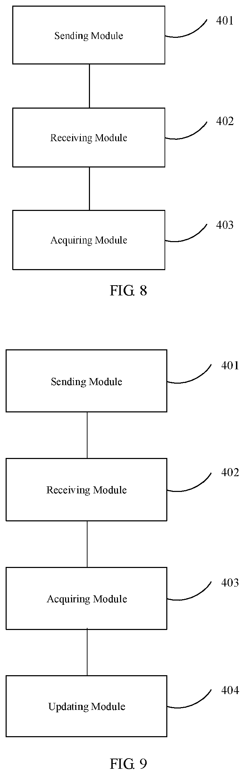

FIG. 8 is a schematic structural diagram of a log entry duplication apparatus provided by an embodiment of the present invention. Referring to FIG. 8, the apparatus includes a sending module 401, a receiving module 402 and an acquiring module 403.

The sending module 401 is used for sending in parallel a plurality of first log entries to a plurality of second nodes, each first log entry being used for instructing a second node to duplicate the first log entry;

> the receiving module 402 is used for receiving at least one confirmation response of any one of the plurality of the second nodes, each confirmation response including a commit index of the second node;
> the acquiring module 403 is used for acquiring at least one second log entry to be sent supplementarily to the second node according to the commit index of the second node; and
> the sending module 401 is further used for sending in parallel the at least one second log entry to the second node, each second log entry being used for instructing the second node to duplicate the second log entry.

In the embodiments of the present invention, the first node sends in parallel a plurality of first log entries to a plurality of second nodes, and receives at least one confirmation response of any of the second nodes including a commit index of the second node so as to send in parallel at least one second log entry to the second node according to the commit index of the second node. In addition, as the plurality of first log entries are sent in parallel to the plurality of second nodes and in order to avoid the situation that the second nodes receive log entries by mistake such as missing receiving or over-receiving due to network problems, the first node further provides a supplementary sending mechanism for log entries, so that the time for sending a plurality of first log entries is saved while the consistency of data of each node in the node cluster is guaranteed, and the log entry duplicating efficiency is improved.

In another embodiment, the acquiring module 403 is used for, if the commit index of the second node is less than a target threshold value, acquiring a log between the target threshold value and a last append index of the first node as the at least one second log entry to be sent supplementarily to the second node.

In another embodiment, the acquiring module 403 is used for, if the commit index of the second node is less than a last append index of the first node, acquiring a log between the commit index of the second node and the last append index of the first node as the at least one second log entry to be sent supplementarily to the second node.

In another embodiment, referring to FIG. 9, the apparatus further includes an updating module 404.

The updating module 404 is used for maintaining a confirmation table for the second node, and every time a confirmation response is received, updating a commit index in the confirmation table of the second node if a commit index in the newly received confirmation response is greater than the commit index of the second node in the confirmation table; and

the acquiring module 403 is further used for performing the operation of acquiring the at least one second log entry to be sent supplementarily to the second node according to the commit index of the second node every other target cycle.

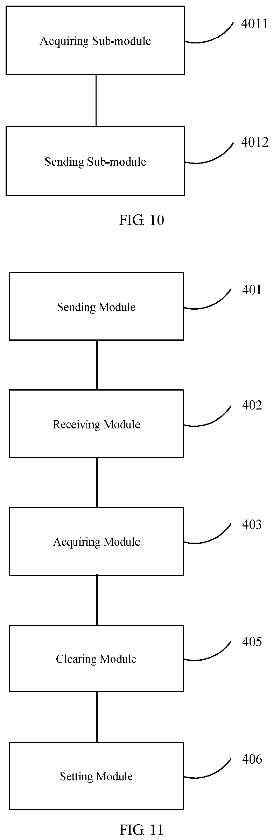

In another embodiment, referring to FIG. 10, the sending module 401 includes an acquiring sub-module 4011 and a sending sub-module 4012.

The acquiring sub-module 4011 is used for acquiring a send window, a window width of the send window being used for indicating the number of log entries sent in parallel; and

the sending sub-module 4012 is used for sending the plurality of the first log entries in the send window by adopting multithreading.

In another embodiment, referring to FIG. 11, the apparatus further includes a clearing module 405 and a setting module 406.

The clearing module 405 is used for, when the first node switches to the following state, clearing a log entry which is not sent and stopping the parallel transmission operation; and

the setting module 406 is used for setting a next commit index to be received as a last append index of the first node plus 1 according to the last append index of the first node.

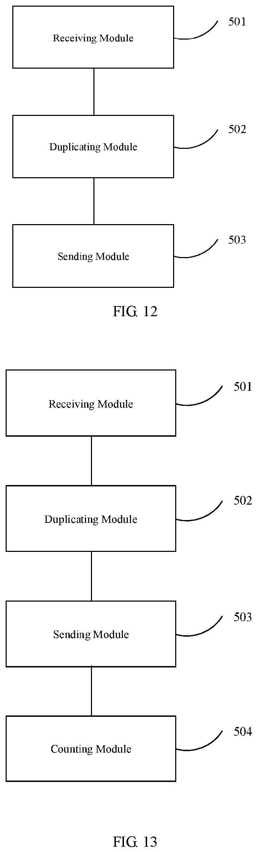

FIG. 12 is a schematic structural diagram of a log entry duplication apparatus provided by an embodiment of the present invention. Referring to FIG. 12, the apparatus includes a receiving module 501, a duplicating module 502 and a sending module 503.

The receiving module 501 is used for receiving in parallel a plurality of log entries sent by the first node, each log entry being used for instructing the second node to record the log entry;

the duplicating module 502 is used for duplicating the log entry into a log of the second node according to a block index of each log entry, and updating a commit index of the second node; and

the sending module 503 is used for sending a confirmation response to the first node, the confirmation response including the commit index of the second node.

In the embodiments of the present invention, the first node sends in parallel a plurality of first log entries to a plurality of second nodes, and receives at least one confirmation response of any of the second nodes including a commit index of the second node so as to send in parallel at least one second log entry to the second node according to the commit index of the second node. In addition, as the plurality of first log entries are sent in parallel to the plurality of second nodes and in order to avoid the situation that the second nodes receive log entries by mistake such as missing receiving or over-receiving due to network problems, the first node further provides a supplementary sending mechanism for log entries, so that the time for sending a plurality of first log entries is saved while the consistency of data of each node in the node cluster is guaranteed, and the log entry duplicating efficiency is improved.

In another embodiment, the duplicating module 502 is used for, when duplicating of any log entry is completed and a received log entry does not include a target log entry contiguous with the block index of the log entry, storing a log entry that is not duplicated in the received log entry into a cache queue, and continuing to duplicate until the target log entry is received.

In another embodiment, referring to FIG. 13, the apparatus further includes a counting module 504.

The counting module 504 is used for counting based on a block index of the received log entry; and

the sending module 503 is further used for performing the operation of sending the confirmation response to the first node when any log entry is received for two or more times.

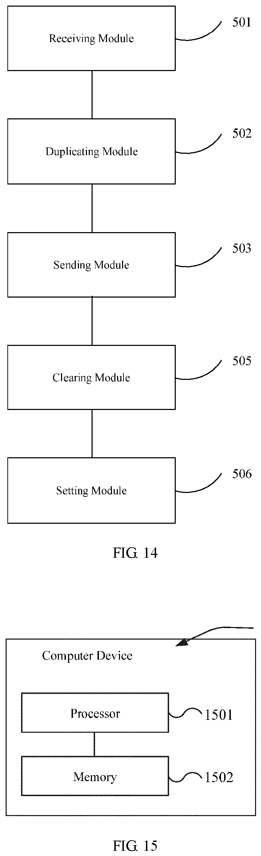

In another embodiment, referring to FIG. 14, the apparatus further includes a clearing module 505 and a setting module 506.

The clearing module 505 is used for, when the second node switches to the leading state, clearing a log entry which is not duplicated and stopping the parallel receiving operation; and

the setting module 506 is used for setting a confirmation table for a node in the following state in the node cluster according to a last append index of the second node, a commit index of each node being equal to the last append index of the second node plus 1.

It should be noted that when the log entry duplication apparatus provided by the above embodiments duplicates log entries, the division of the functional modules described above is illustrated merely by way of example. In practice, the function distribution may be completed by different functional modules according to needs, that is, an internal structure of the device is divided into different functional modules to implement all or a part of the functions described above. In addition, the log entry duplication apparatus and the log entry duplication method provided by the above embodiments belong to the same concept, and the specific implementation processes are detailed in the method embodiments and will not be described in detail herein.

FIG. 15 is a schematic structural diagram of a computer device 1500 provided by an embodiment of the present invention. The computer device may vary widely due to configuration or performance, and may include one or more central processing units (CPU) 1501 and one or more memories 1502 in which at least one instruction is stored. In a possible implementation, the at least one instruction is loaded and executed by the processor 1501 to implement the method steps in the log entry duplication method applied to a first node running in a leading state in a node cluster as provided by the various method embodiments described above. The node cluster further includes a plurality of second nodes running in a following state. In particular, the method steps implemented by the processor 1501 when the processor 1501 executes the instruction include:

sending in parallel a plurality of first log entries to the plurality of the second nodes, each first log entry being used for instructing a second node to duplicate the first log entry;

receiving at least one confirmation response of any one of the plurality of the second nodes, each confirmation response including a commit index of the second node;

acquiring at least one second log entry to be sent supplementarily to the second node according to the commit index of the second node; and

sending in parallel the at least one second log entry to the second node, each second log entry being used for instructing the second node to duplicate the second log entry.

Alternatively, the processor 1501 is to perform operations of:

if the commit index of the second node is less than a target threshold value, acquiring a log between the target threshold value and a last append index of the first node as the at least one second log entry to be sent supplementarily to the second node.

Alternatively, the processor 1501 is to perform operations of:

if the commit index of the second node is less than a last append index of the first node, acquiring a log between the commit index of the second node and the last append index of the first node as the at least one second log entry to be sent supplementarily to the second node.

Alternatively, the processor 1501 is further to perform operations of:

maintaining a confirmation table for the second node, and every time a confirmation response is received, updating a commit index in the confirmation table of the second node if a commit index in the newly received confirmation response is greater than the commit index of the second node in the confirmation table; and

performing the operation of acquiring the at least one second log entry to be sent supplementarily to the second node according to the commit index of the second node every other target cycle.

Alternatively, the processor 1501 is to perform operations of:

acquiring a send window, a window width of the send window being used for indicating the number of log entries sent in parallel; and

sending the plurality of the first log entries in the send window by adopting multithreading.

Alternatively, the processor 1501 is to perform operations of:

when the first node switches to the following state, clearing a log entry which is not sent and stopping the parallel transmission operation; and

setting a next commit index to be received as a last append index of the first node plus 1 according to the last append index of the first node.

In another possible implementation, the at least one instruction is loaded and executed by the processor 1501 to implement the method steps of the log entry duplication method provided by the various method embodiments described above; the method is applied to a second node running in a following state in a node cluster; the node cluster further includes a first node running in a leading state. The method steps implemented by the processor 1501 when the processor 1501 executes the instruction include:

receiving in parallel a plurality of log entries sent by the first node, each log entry being used for instructing the second node to record the log entry;

duplicating the log entry into a log of the second node according to a block index of each log entry, and updating a commit index of the second node; and

sending a confirmation response to the first node, the confirmation response including the commit index of the second node.

Alternatively, the processor 1501 is to perform operations of:

when duplicating of any log entry is completed and a received log entry does not include a target log entry contiguous with the block index of the log entry, storing a log entry that is not duplicated in the received log entry into a cache queue, and continuing to duplicate until the target log entry is received.

Alternatively, the processor 1501 is further to perform operations of:

counting based on a block index of the received log entry; and

performing the operation of sending the confirmation response to the first node when any log entry is received for two or more times.

Alternatively, the processor 1501 is further to perform operations of:

when the second node switches to the leading state, clearing a log entry which is not duplicated and stopping the parallel receiving operation; and

setting a confirmation table for a node in the following state in the node cluster according to a last append index of the second node, a commit index of each node being equal to the last append index of the second node plus 1.

Of course, the computer device 1500 may also have components such as a wired or wireless network interface, a keyboard, and an input/output interface for input and output, and may further include other components for implementing functions of the apparatus, which will not be described in detail herein.

In an exemplary embodiment, the present invention provides a computer-readable storage medium, such as a memory including instructions which may be executed by a processor to implement the log entry duplication method in the above embodiments. For example, the computer-readable storage medium may be Read-Only Memory (ROM), Random Access Memory (RAM), Compact Disc Read-Only Memory (CD-ROM), a magnetic tape, a floppy disk, an optical data storage device, and the like.

It will be appreciated by a person skilled in the art that all or part of the steps for implementing the embodiments described above may be implemented by hardware, or by associated hardware instructed by a program. The program may be stored in a computer-readable storage medium which may be a read-only memory, a magnetic or an optical disk, and the like.

The above description describes exemplary embodiments of the present invention and is not intended to limit the present invention.

**Claims**

1. A log entry duplication method, wherein the method is applied to a first node running in a leading state in a node cluster comprising a plurality of second nodes running in a following state, the method comprises:

   sending (301) in parallel a plurality of first log entries to the plurality of the second nodes, each first log entry being used for instructing a second node to duplicate the first log entry;
   receiving (304) at least one confirmation response of any one of the plurality of the second nodes, each confirmation response comprising a commit index of the second node;
   acquiring at least one second log entry to be sent supplementarily to the second node according to the commit index of the second node; and
   sending (307) in parallel the at least one second log entry to the second node, each second log entry being used for instructing the second node to duplicate the second log entry,
   **characterized in that**
   the sending (301) in parallel a plurality of first log entries to the plurality of the second nodes comprises:

   acquiring a send window, a window width of the send window being used for indicating the number of log entries sent in parallel; and
   sending the plurality of the first log entries in the send window by adopting multithreading, wherein

   the send window includes a sending queue comprising a plurality of threads, each thread including a sign and a send identifier,
   the plurality of the first log entries are sent out of order through the multithreading, and
   each of the plurality of the first log entries includes a block index for indicating a duplicating order of the first log entries so that the second nodes duplicate the first log entries in order when receiving the out of order first log entries.

2. The method according to claim 1, wherein the acquiring at least one second log entry to be sent supplementarily to the second node according to the commit index of the second node comprises:
   if the commit index of the second node is less than a target threshold value, acquiring a log between the target threshold value and a last append index of the first node as the at least one second log entry to be sent supplementarily to the second node.

3. The method according to claim 1, wherein the acquiring at least one second log entry to be sent supplementarily to the second node according to the commit index of the second node comprises:
   if the commit index of the second node is less than a last append index of the first node, acquiring a log between the commit index of the second node and the last append index of the first node as the at least one second log entry to be sent supplementarily to the second node.

4. The method according to any of claims 1 to 3, wherein after the receiving at least one confirmation response of any one of the plurality of the second nodes, the method further comprises:

maintaining a confirmation table for the second node, and every time a confirmation response is received, updating a commit index in the confirmation table of the second node if a commit index in the newly received confirmation response is greater than the commit index of the second node in the confirmation table; and performing the operation of acquiring the at least one second log entry to be sent supplementarily to the second node according to the commit index of the second node every other target cycle.

5. The method according to claim 1, further comprising:

when the first node switches to the following state, clearing a log entry which is not sent and stopping the parallel transmission operation; and
setting a next commit index to be received as a last append index of the first node plus 1 according to the last append index of the first node.

6. A log entry duplication method, wherein the method is applied to a second node running in a following state in a node cluster comprising a first node running in a leading state, **characterized in that**, the method comprises:

setting a receive window, a window width of the receive window being used for indicating a number of log entries received in parallel, the receive window includes a receiving queue comprising a plurality of threads, each thread including a sign and a send identifier;
receiving (302) in parallel a plurality of log entries sent by the first node based on the receive window, wherein the plurality of log entries are received out of order through multithreading, and each log entry being used for instructing the second node to record the log entry;
duplicating (303) the log entry into a log of the second node according to a block index of each log entry so that the log entries are duplicated in order when receiving the out of order log entries, and updating a commit index of the second node; and
sending (304) a confirmation response to the first node, the confirmation response comprising the commit index of the second node.

7. The method according to claim 6, wherein the duplicating the log entry into a log of the second node according to a block index of each log entry comprises:
when duplicating of any log entry is completed and a received log entry does not include a target log entry contiguous with the block index of the log entry, storing a log entry that is not duplicated in the received log entry into a cache queue, and continuing to duplicate until the target log entry is received.

8. The method according to claim 6, further comprising:

counting based on a block index of the received log entry; and
performing the operation of sending the confirmation response to the first node when any log entry is received for two or more times.

9. The method according to claim 6, further comprising:

when the second node switches to the leading state, clearing a log entry which is not duplicated and stopping the parallel receiving operation; and
setting a confirmation table for a node in the following state in the node cluster according to a last append index of the second node, a commit index of each node being equal to the last append index of the second node plus 1.

10. A computer device, comprising a memory (1502), a processor (1501) and computer-executable instructions stored in the memory (1502) and executable by the processor (1501), the processor (1501) implementing method steps of a log entry duplication method according to any of claims 1 to 9 when executing the computer-executable instructions.

11. A computer-readable storage medium (1502), wherein the computer-readable storage medium (1502) has instructions stored thereon, the instructions being executed by a processor (1501) to perform the log entry duplication method of any of claims 1 to 9.

**Patentansprüche**

1. Verfahren zur Duplizierung von Protokolleinträgen, wobei das Verfahren auf einen ersten Knoten angewendet wird, der in einem führenden Zustand in einem Knotencluster läuft, der eine Vielzahl von zweiten Knoten umfasst, die in einem folgenden Zustand laufen, wobei das Verfahren umfasst:

   paralleles Senden (301) einer Vielzahl von ersten Protokolleinträgen an die Vielzahl von zweiten Knoten, wobei jeder erste Protokolleintrag dazu dient, einen zweiten Knoten anzuweisen, den ersten Protokolleintrag zu duplizieren;
   Empfangen (304) mindestens einer Bestätigungsantwort eines beliebigen der Vielzahl von zweiten Knoten, wobei jede Bestätigungsantwort einen Commit-Index des zweiten Knotens enthält;
   Erfassen mindestens eines zweiten Protokolleintrags, der zusätzlich an den zweiten Knoten zu senden ist, entsprechend dem Commit-Index des zweiten Knotens; und
   paralleles Senden (307) des mindestens einen zweiten Protokolleintrags an den zweiten Knoten, wobei jeder zweite Protokolleintrag verwendet wird, um den zweiten Knoten anzuweisen, den zweiten Protokolleintrag zu duplizieren,
   **dadurch gekennzeichnet, dass**
   das parallele Senden (301) einer Vielzahl von ersten Protokolleinträgen an die Vielzahl von zweiten Knoten umfasst:

      Erfassen eines Sendefensters, wobei eine Fensterbreite des Sendefensters zur Angabe der Anzahl der parallel gesendeten Protokolleinträge verwendet wird;
      und
      Senden der Vielzahl der ersten Protokolleinträge im Sendefenster durch Annahme von Multithreading, wobei

   das Sendefenster eine Sendewarteschlange enthält, die eine Vielzahl von Threads umfasst, wobei jeder Thread ein Zeichen und einen Sendeidentifikator enthält,
   die Mehrzahl der ersten Protokolleinträge durch das Multithreading außer der Reihe gesendet werden, und jeder der mehreren ersten Protokolleinträge einen Blockindex zur Angabe einer Duplizierreihenfolge der ersten Protokolleinträge enthält, so dass die zweiten Knoten die ersten Protokolleinträge in Reihenfolge duplizieren, wenn sie die ersten Protokolleinträge außer der Reihe empfangen.

2. Verfahren nach Anspruch 1, wobei das Erfassen mindestens eines zweiten Protokolleintrags, der zusätzlich an den zweiten Knoten zu senden ist, gemäß dem Commit-Index des zweiten Knotens umfasst:
   wenn der Commit-Index des zweiten Knotens kleiner als ein Zielschwellenwert ist, Erfassen eines Protokolls zwischen dem Zielschwellenwert und einem letzten Append-Index des ersten Knotens als der mindestens eine zweite Protokolleintrag, der zusätzlich an den zweiten Knoten zu senden ist.

3. Verfahren nach Anspruch 1, wobei das Erfassen mindestens eines zweiten, zusätzlich an den zweiten Knoten zu sendenden Protokolleintrags entsprechend dem Commit-Index des zweiten Knotens umfasst:
   wenn der Commit-Index des zweiten Knotens kleiner ist als ein letzter Append-Index des ersten Knotens, Erfassen eines Protokolls zwischen dem Commit-Index des zweiten Knotens und dem letzten Append-Index des ersten Knotens als der mindestens eine zweite Protokolleintrag, der zusätzlich an den zweiten Knoten zu senden ist.

4. Verfahren nach einem der Ansprüche 1 bis 3, wobei das Verfahren nach dem Empfang mindestens einer Bestätigungsantwort eines beliebigen der Vielzahl von zweiten Knoten ferner umfasst:

   Führen einer Bestätigungstabelle für den zweiten Knoten, und jedes Mal, wenn eine Bestätigungsantwort empfangen wird, Aktualisieren eines Festschreibungsindex in der Bestätigungstabelle des zweiten Knotens, wenn ein Festschreibungsindex in der neu empfangenen Bestätigungsantwort größer ist als der Festschreibungsindex des zweiten Knotens in der Bestätigungstabelle; und
   Durchführen des Vorgangs des Erfassens des mindestens einen zweiten Protokolleintrags, der zusätzlich an den zweiten Knoten gemäß dem Commit-Index des zweiten Knotens in jedem anderen Zielzyklus zu senden ist.

5. Verfahren nach Anspruch 1, ferner umfassend:

   wenn der erste Knoten in den folgenden Zustand wechselt, Löschen eines nicht gesendeten Protokolleintrags und Anhalten des parallelen Sendevorgangs; und

Festlegen eines nächsten Commit-Index, der als letzter Append-Index des ersten Knotens plus 1 gemäß dem letzten Append-Index des ersten Knotens empfangen werden soll.

6. Verfahren zur Duplizierung von Protokolleinträgen, wobei das Verfahren auf einen zweiten Knoten angewendet wird, der in einem folgenden Zustand in einem Knotencluster läuft, der einen ersten Knoten umfasst, der in einem führenden Zustand läuft, **dadurch gekennzeichnet, dass** das Verfahren umfasst:

Einstellen eines Empfangsfensters, wobei eine Fensterbreite des Empfangsfensters zur Angabe einer Anzahl von parallel empfangenen Protokolleinträgen verwendet wird, das Empfangsfenster eine Empfangswarteschlange mit mehreren Threads enthält, wobei jeder Thread ein Zeichen und eine Sendekennung enthält;
paralleles Empfangen (302) einer Vielzahl von Protokolleinträgen, die von dem ersten Knoten auf der Grundlage des Empfangsfensters gesendet werden, wobei die Vielzahl von Protokolleinträgen durch Multithreading außer der Reihe empfangen wird und jeder Protokolleintrag dazu verwendet wird, den zweiten Knoten anzuweisen, den Protokolleintrag aufzuzeichnen;
Duplizieren (303) des Protokolleintrags in ein Protokoll des zweiten Knotens gemäß einem Blockindex jedes Protokolleintrags, so dass die Protokolleinträge in Reihenfolge dupliziert werden, wenn die Protokolleinträge nicht in Reihe empfangen werden, und Aktualisieren eines Commit-Index des zweiten Knotens; und
Senden (304) einer Bestätigungsantwort an den ersten Knoten, wobei die Bestätigungsantwort den Commit-Index des zweiten Knotens enthält.

7. Verfahren nach Anspruch 6, wobei das Duplizieren des Protokolleintrags in ein Protokoll des zweiten Knotens gemäß einem Blockindex jedes Protokolleintrags umfasst:
wenn das Duplizieren eines beliebigen Protokolleintrags abgeschlossen ist und ein empfangener Protokolleintrag keinen mit dem Blockindex des Protokolleintrags zusammenhängenden Zielprotokolleintrag enthält, Speichern eines Protokolleintrags, der in dem empfangenen Protokolleintrag nicht dupliziert ist, in einer Cache-Warteschlange und Fortsetzen des Duplizierens, bis der Zielprotokolleintrag empfangen wird.

8. Verfahren nach Anspruch 6, ferner umfassend:

Zählen auf der Grundlage eines Blockindexes des empfangenen Protokolleintrags; und
Durchführen des Vorgangs des Sendens der Bestätigungsantwort an den ersten Knoten, wenn ein beliebiger Protokolleintrag zwei oder mehr Mal empfangen wird.

9. Verfahren nach Anspruch 6, ferner umfassend:

wenn der zweite Knoten in den führenden Zustand wechselt, Löschen eines nicht duplizierten Protokolleintrags und Stoppen des parallelen Empfangsvorgangs; und
Setzen einer Bestätigungstabelle für einen Knoten im folgenden Zustand in dem Knotencluster gemäß einem letzten Append-Index des zweiten Knotens, wobei ein Commit-Index jedes Knotens gleich dem letzten Append-Index des zweiten Knotens plus 1 ist.

10. Computervorrichtung mit einem Speicher (1502), einem Prozessor (1501) und computerausführbaren Anweisungen, die in dem Speicher (1502) gespeichert und von dem Prozessor (1501) ausführbar sind, wobei der Prozessor (1501) Verfahrensschritte eines Verfahrens zur Duplizierung von Protokolleinträgen nach einem der Ansprüche 1 bis 9 implementiert, wenn er die computerausführbaren Anweisungen ausführt.

11. Computerlesbares Speichermedium (1502), wobei auf dem computerlesbaren Speichermedium (1502) Befehle gespeichert sind, die von einem Prozessor (1501) ausgeführt werden, um das Verfahren zur Verfahren zur Duplizierung von Protokolleinträgen nach einem der Ansprüche 1 bis 9 durchzuführen.

## Revendications

1. Procédé de duplication d'entrée de journal, le procédé étant appliqué à un premier noeud fonctionnant dans l'état principal dans une grappe de noeuds comprenant une pluralité de seconds noeuds fonctionnant dans un état de suivi, le procédé consiste à:

envoyer (301) en parallèle une pluralité de premières entrées de journal à la pluralité des seconds noeuds, chaque première entrée de journal étant utilisée pour ordonner à un second noeud de dupliquer la première entrée de journal;
recevoir (304) au moins une réponse de confirmation d'un quelconque parmi la pluralité des seconds noeuds, chaque réponse de confirmation comprenant un indice de validation du second noeud;
acquérir au moins une seconde entrée de journal devant être envoyée en plus au second noeud selon l'index de validation du second noeud; et
envoyer (307) en parallèle l'au moins une seconde entrée de journal au second noeud, chaque seconde entrée de journal étant utilisée pour ordonner au second noeud de dupliquer la seconde entrée de journal, **caractérisé en ce que**
l'envoi (301) en parallèle d'une pluralité de premières entrées de journal à la pluralité de seconds noeuds consiste à:

acquérir une fenêtre d'envoi, une largeur de fenêtre de la fenêtre d'envoi étant utilisée pour indiquer le nombre d'entrées de journal envoyées en parallèle; et
envoyer la pluralité des premières entrées de journal dans la fenêtre d'envoi par adoption de multifil, dans lequel

la fenêtre d'envoi comprend une file d'attente d'envoi comprenant une pluralité de fils, chaque fil comprenant un signal et un identifiant d'envoi,
la pluralité des premières entrées de journal sont envoyés dans le désordre par l'intermédiaire du multifil, et chacune parmi la pluralité des premières entrées de journal comprend un index de bloc pour indiquer un ordre de duplication des premières entrées de journal de sorte que les seconds noeuds dupliquent les premières entrées de journal dans l'ordre lors de la réception des premières entrées de journal dans le désordre.

2. Procédé selon la revendication 1, dans lequel l'acquisition d'au moins une seconde entrée de journal devant être envoyée en plus au second noeud selon l'index de validation du second noeud consiste à:
si l'index de validation du second noeud est inférieur à une valeur de seuil cible, acquérir un journal entre la valeur de seuil cible et un dernier index d'adjonction du premier noeud comme l'au moins une seconde entrée de journal devant être envoyée en plus au second noeud.

3. Procédé selon la revendication 1, dans lequel l'acquisition d'au moins une seconde entrée de journal devant être envoyée en plus au second noeud selon l'index de validation du second noeud consiste à:
si l'index de validation du second noeud est inférieur à un dernier index d'adjonction du premier noeud, acquérir un journal entre l'index de validation du second noeud et le dernier index d'adjonction du premier noeud comme l'au moins une seconde entrée de journal devant être envoyée en plus au second noeud.

4. Procédé selon l'une quelconque des revendications 1 à 3, dans lequel après la réception d'au moins une réponse de confirmation de l'un quelconque parmi la pluralité des seconds noeuds, le procédé consistant en outre à:

conserver une table de confirmation pour le second noeud, et à chaque fois qu'une réponse de confirmation est reçue, mettre à jour un index de validation dans la table de confirmation du second noeud si un index de validation dans la réponse de confirmation récemment reçue est supérieur à l'index de validation du second noeud dans la table de confirmation; et
réaliser l'opération consistant à acquérir l'au moins une seconde entrée de journal devant être envoyée en plus au second noeud selon l'index de validation du second noeud à chaque autre cycle cible.

5. Procédé selon la revendication 1, consistant en outre à:

lorsque le premier noeud passe à l'état de suivi, supprimer une entrée de journal qui n'est pas envoyée et arrêter l'opération de transmission parallèle; et
définir un index de validation suivant comme devant être reçu comme un dernier index d'adjonction du premier noeud plus 1 selon le dernier index d'adjonction du premier noeud.

6. Procédé de duplication d'entrée de journal, le procédé étant appliqué à un second noeud fonctionnant dans un état de suivi dans une grappe de noeuds comprenant un premier noeud fonctionnant dans un état principal, **caractérisé en ce que** le procédé consiste à:

définir une fenêtre de réception, une largeur de fenêtre de la fenêtre de réception étant utilisée pour indiquer un nombre d'entrées de journal reçues en parallèle, la fenêtre de réception comprenant une file d'attente de réception comprenant une pluralité de fils, chaque fil comprenant un signe et un identifiant d'envoi;

recevoir (302) en parallèle une pluralité d'entrées de journal envoyées par le premier noeud sur la base de la fenêtre de réception, dans lequel la pluralité d'entrées de journal sont reçues dans le désordre par l'intermédiaire du multifil, et chaque entrée de journal étant utilisée pour ordonner au second noeud d'enregistrer l'entrée de journal;

dupliquer (303) l'entrée de journal dans un journal du second noeud selon un index de bloc de chaque entrée de journal de sorte que les entrées de journal soient dupliquées dans l'ordre lors de la réception des entrées de journal dans le désordre, et mettre à jour un index de validation du second noeud; et

envoyer (304) une réponse de confirmation au premier noeud, la réponse de confirmation comprenant l'index de validation du second noeud.

7. Procédé selon la revendication 6, dans lequel la duplication de l'entrée de journal dans un journal du second noeud selon un index de bloc de chaque entrée de journal consiste à:

lorsque la duplication d'une quelconque entrée de journal est terminée et qu'une entrée de journal reçue ne comprend pas une entrée de journal cible contiguë à l'index de bloc de l'entrée de journal, stocker une entrée de journal qui n'est pas dupliquée dans l'entrée de journal reçue dans une file d'attente de mémoire cache, et poursuivre la duplication jusqu'à réception de l'entrée de journal cible.

8. Procédé selon la revendication 6, consistant en outre à:

compter sur la base d'un index de bloc de l'entrée de journal reçue; et

réaliser l'opération d'envoi de la réponse de confirmation au premier noeud lorsqu'une quelconque entrée de journal est reçue au moins deux fois.

9. Procédé selon la revendication 6, consistant en outre à:

lorsque le second noeud passe à l'état principal, supprimer une entrée de journal qui n'est pas dupliquée et arrêter l'opération de réception parallèle; et

définir une table de confirmation pour un noeud dans l'état de suivi dans la grappe de noeuds selon un dernier index d'adjonction du second noeud, un index de validation de chaque noeud étant égal au dernier index d'adjonction du second noeud plus 1.

10. Dispositif informatique, comprenant une mémoire (1502), un processeur (1501) et des instructions exécutables par ordinateur stockées dans la mémoire (1502) et exécutables par le processeur (1501), le processeur (1501) mettant en oeuvre les étapes de procédé d'un procédé de duplication d'entrée de journal selon l'une quelconque des revendications 1 à 9 lors de l'exécution des instructions exécutables par ordinateur.

11. Support de stockage lisible par ordinateur (1502), le support de stockage lisible par ordinateur (1502) sur lequel sont stockées des instructions qui, lorsqu'elles sont exécutées par un processeur (1501) mettent en oeuvre le procédé de duplication d'entrée de journal selon l'une quelconque des revendications 1 à 9.

FIG. 1

FIG. 2

First Node

Second Node

300. the first node receives a plurality of submission instructions issued by a client and adds the plurality of the submission instructions to a log of the first node to form a plurality of first log entries

301. the first node acquires a send window

301. the first node sends in parallel a plurality of first log entries in the send window to a plurality of second nodes by adopting multithreading

302. the second node receives, in parallel, the plurality of the first log entries sent by the first node

303. the second node duplicates the log entries into a log according to the block index of each log entry, and when the duplicating of any log entry is completed and a target log entry contiguous with the block index of the log entry is not included in the received log entries, stores a log entry that is not duplicated in the received log entries into a cache queue

304. when the second node completes the duplicating of any log entry, the second node updates a commit index

304. when the second node completes the duplicating of any log entry, the second node sends a confirmation response to the first node

305. the first node receives at least one confirmation response of any second node, maintains a confirmation table for the second node, and every time a confirmation response is received, updates the commit index in the confirmation table of the second node if a commit index in the newly received confirmation response is greater than the commit index of the second node in the confirmation table

306. if the commit index of the second node in the confirmation response is less than a target threshold value, the first node acquires a log between the target threshold value and a last append index of the first node as at least one second log entry to be sent supplementarily to the second node.

307. the first node sends, in parallel, at least one second log entry to the second node

308. the second node receives at least one second log entry sent by the first node, extracts a log entry that is not duplicated from the cache queue, and duplicates the log entry according to the block index of each log entry

FIG. 3

| Log Entry |
|---|
| Sign |
| Send Identifier |

**Send Window**

| Queue |
|---|

Thread 1

| Sign |
|---|
| Send Identifier |

Thread 2

| Sign |
|---|
| Send Identifier |

Thread 3

| Sign |
|---|
| Send Identifier |

Thread 4

| Sign |
|---|
| Send Identifier |

FIG. 4

| Log Entry |
|---|
| Signature Verification |
| Sign |
| Confirmation Response |

**Receive Window**

| Concurrent Skip List Map |
|---|

Thread 1

| Sign |
|---|
| Send Identifier |

Thread 2

| Sign |
|---|
| Send Identifier |

Thread 3

| Sign |
|---|
| Send Identifier |

Thread 4

| Sign |
|---|
| Send Identifier |

FIG. 5

Send Window

| 1 | 2 | 3 | 4 | 5 |

Receive Window

| 1 | 1 | 5 | 1 | 4 | 1 | 2 | 1 | 3 | 1 |

Receive Counter

FIG. 6

Follower Node

Candidate Node

Leader Node

FIG. 7

Sending Module — 401

Receiving Module — 402

Acquiring Module — 403

FIG. 8

Sending Module — 401

Receiving Module — 402

Acquiring Module — 403

Updating Module — 404

FIG. 9

Acquiring Sub-module 4011

Sending Sub-module 4012

FIG. 10

Sending Module 401

Receiving Module 402

Acquiring Module 403

Clearing Module 405

Setting Module 406

FIG. 11

Receiving Module — 501

Duplicating Module — 502

Sending Module — 503

FIG. 12

Receiving Module — 501

Duplicating Module — 502

Sending Module — 503

Counting Module — 504

FIG. 13

Receiving Module    501

Duplicating Module    502

Sending Module    503

Clearing Module    505

Setting Module    506

FIG. 14

Computer Device

Processor    1501

Memory    1502

FIG. 15

**EP 3 623 963 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIEGO ONGARO et al.** In Search of an Understandable Consensus Algorithm. *Proceedings of USENIX ATC '14: 2014 USENIX Annual Technical Conference, June 19-20, 2014 - Philadelphia, PA,* 19 June 2014, 305-319